# FASCICULE DE BREVET EUROPEEN

(11) **EP 3 238 518 B1**
(45) Date de publication et mention de la délivrance du brevet: **10.05.2023**
(21) Numéro de dépôt: 17168786.6
(22) Date de dépôt: 28.04.2017
(51) Int. Cl.: A01C 7/04, A01C 7/12

(54) **SEMOIR ÉQUIPÉ D'UN DISPOSITIF DE RÉGULATION DE LA DISTRIBUTION DE GRAINES, ET DISPOSITIF DE RÉGULATION CORRESPONDANT**
SÄMASCHINE, DIE MIT EINER VORRICHTUNG ZUR REGULIERUNG DER SAMENVERTEILUNG AUSGESTATTET IST, UND ENTSPRECHENDE REGULIERVORRICHTUNG
SEEDER PROVIDED WITH A DEVICE FOR CONTROLLING THE DISTRIBUTION OF SEEDS, AND CORRESPONDING CONTROL DEVICE

(30) Priorité: 28.04.2016 FR 1653845
(43) Date de publication de la demande: 01.11.2017
(73) Titulaire: Burel Production, 35220 Chateaubourg (FR)
(72) Inventeur: CLOCHARD, Daniel, 35113 Domagné (FR); LEGAIGNOUX, Nicolas, 35200 Rennes (FR)
(74) Mandataire: Vidon Brevets & Stratégie

(56) Documents cités:
- EP-A1- 3 000 299
- CA-A1- 2 814 221
- DE-B- 1 051 047
- DE-B- 1 064 276
- DE-C- 254 520
- US-A- 5 549 060

## Description

### 1. Domaine de l'invention

Le domaine de l'invention est celui des semoirs en ligne, notamment pour le semis de céréales ou de légumineuses.

L'invention concerne plus précisément l'amélioration de la répartition sur le sol des graines au moment de leur distribution, et concerne notamment la régulation de la distribution, en aval d'un dispositif de distribution et de dosage d'un élément semeur. On entend ici par « graines » des semences, et plus généralement toutes particules susceptibles d'être distribuées de la même façon, par exemple des particules d'engrais ou de protection des semis (anti-limaces par exemple).

### 2. Art antérieur et ses inconvénients

Dans le cadre de l'agriculture de précision, il est souhaitable que la distribution des graines, pendant les semis, soit la plus régulière et la plus précise possible. Il est généralement souhaité que les graines soient déposées dans un sillon, à intervalles réguliers, sans manque ni doublon.

Dans ce but, il a été développé des semoirs de précision, souvent appelés semoirs monograine. Ces semoirs monograine sont prévus pour semer spécifiquement un type de graines prédéterminé (maïs, betterave,...). Ils sont utilisés pour des cultures d'inter-rang supérieur à 25 cm. Chaque rang est généralement alimenté en graines par une trémie individuelle reliée à ses propres organes de distribution, d'enterrage et de rappuyage. Ces semoirs sont efficaces, mais au prix d'une complexité relativement importante. Ils disposent de moyens spécifiques, aptes à saisir des graines Ils sont encombrants, nécessitent de nombreux réglages, un apport en énergie (notamment pneumatique, pour fournir une dépression permettant de maintenir les graines une à une) adapté, et nécessitent des graines précisément calibrées. Les semoirs monograine sont en conséquence coûteux, et réservés à certaines situations particulières.

De plus, les semoirs monograine manquent de polyvalence, et présentent notamment un encombrement tel qu'ils ne permettent pas de réaliser les semis de certaines graines, par exemple du blé, pour lesquelles un écartement inter-rang inférieur à 25 cm est souhaité.

Il existe par ailleurs des semoirs « multigraine », ou « en ligne », utilisés notamment pour les céréales, telles que le blé ou l'avoine. Ils permettent également de réaliser des semis directs, les graines étant distribuées à chaque élément semeur par l'intermédiaire d'un dispositif de dosage et de transport, alimenté par une trémie contenant les graines et dirigeant les graines vers le sol via un conduit de transfert. Un tel dispositif de dosage est généralement placé sous la trémie, et est équipé d'une ou plusieurs roues munies d'alvéoles ou de dents formant des ergots, aptes chacune à recevoir un volume déterminé de graines (les roues étant adaptées au type de graine à semer).

Ces systèmes de dosage et de transport sont prévus pour permettre que les semences soient éjectées d'une manière relativement régulière dans le conduit de transfert de façon à assurer leur répartition homogène, en ligne, dans le sol. Toutefois, on constate en pratique qu'il existe, sur une longueur de sillon, des zones où les graines sont absentes ou au contraire déposées par paquets. Cette répartition irrégulière des graines se traduit par une répartition irrégulière des plants, et donc par une perte de rendement pour l'agriculteur.

Ainsi, alors que la précision des semis avec un semoir monograine peut atteindre 90 à 95% de graines bien placées, elle reste généralement en dessous de 40% avec un semoir en ligne.

Pour améliorer la précision de ces semoirs en ligne, le déposant a proposé, pour répartir les semences de façon plus homogène, de réguler la distribution des graines en ajoutant un réservoir tampon disposé sur le chemin des graines, entre le dispositif de dosage et de transport et l'extrémité du conduit, à proximité du sol. Cette approche est notamment décrite dans le document de brevet FR2691040, qui présente ainsi un système de régulation mettant en oeuvre une pluralité de diabolos disposés à la sortie du dispositif de dosage. Les diabolos saisissent les graines dès la sortie du doseur par l'intermédiaire d'une goulotte d'approvisionnement qui sert de réserve tampon, pour amortir l'effet des arrivées par paquets et des lacunes de graines. La forme en V du diabolo permet de rassembler et d'emprisonner les graines pour les aligner les unes à la suite des autres, avec une meilleure précision.

Toutefois, le dispositif de régulation est sensible aux secousses. Il doit être placé à la suite immédiate du doseur, et reste donc éloigné du sol. De ce fait, une grande partie du gain de régularité de distribution des graines se trouve ici aussi annulé durant le transport de la graine entre la sortie du régulateur et le sol. En outre, des blocages de graines peuvent apparaître dans un diabolo, réintroduisant des manques, suivis de paquets au moment de la libération.

Il existe donc un besoin d'une régulation plus efficace, pour les semoirs en ligne, permettant de limiter les pertes de régularité de distribution des graines, sans faire appel aux moyens complexes des semoirs monograine, et notamment à des moyens pneumatiques pour maintenir les graines.

En particulier, il est souhaitable d'améliorer la précision des semoirs classiques, pour se rapprocher de la précision des semoirs monograine, sans la complexité et l'encombrement de ces derniers.

Il est également souhaitable de proposer des solutions polyvalentes, permettant de semer avec une bonne précision de nombreux types de graines, qu'elles soient de taille importante (maïs par exemple), intermédiaire (blé par exemple) ou réduite (colza par exemple).

Des solutions particulières de maintien de graines dans des roues dentées de moyens de dosage sont connues. Elles présentent des éléments de guidage fixes (CA2814221 par exemple) et/ou placées en contact permanent avec les graines (DE1064276 par exemple). Un autre exemple d'un semoir selon le préambule des revendications 1 et 14 est connu de US 5 549 060 A. Ces solutions sont plus ou moins adaptées à des moyens de dosage, mais n'offrent pas une précision suffisante pour une régulation de la distribution et une précision améliorée.

### 3. Exposé de l'invention

L'invention répond à ce besoin en proposant un semoir comprenant une pluralité d'éléments semeurs, chaque élément semeur comprenant :
- des moyens de dosage et de transport, contrôlant le débit des graines à la sortie d'une trémie et délivrant lesdites graines dans un conduit de transfert pour alimenter des moyens de mise en terre desdites graines, et
- un dispositif de régulation monté entre lesdits moyens de dosage et de transport et lesdits moyens de mise en terre, à proximité de ces derniers, ledit dispositif de régulation comprenant un espace de réserve, alimentée en graines via une entrée d'alimentation connectée auxdits moyens de dosage et de transport par une partie amont dudit conduit de transfert.

Selon l'invention, le dispositif de régulation comprend une roue apte à prélever des graines une à une dans ledit espace de réserve, au moyen d'au moins une rangée de dents formant godets, assurant chacun le prélèvement d'une graine dans ladite zone de réserve et la libération de ladite graine dans une partie aval dudit conduit de transfert, et des moyens de retenue retardant ladite libération de chaque graine, dont une partie libre s'étend sensiblement tangentiellement à ladite roue et est souple, de façon à épouser au moins deux rayons centrés sur l'axe de rotation :
- un rayon R1 défini par la pointe desdites dents, c'est-à-dire la partie de ladite roue la plus éloignée dudit axe de rotation ; et
- au moins un rayon R2, inférieur audit rayon R1. lesdits moyens de retenue comprenant au moins un premier balai comprenant un assemblage de poils, au moins une partie libre desdits poils s'étendant sensiblement tangentiellement et sensiblement verticalement à la roue et épousant lesdits deux rayons R1 et R2.

Ainsi, les moyens de retenue viennent en partie en appui sur la périphérie de la roue, définie par la portion de la roue la plus éloignée du centre, la pointe des dents, et épousent en partie un rayon R2 inférieur à R1 (ou une pluralité de rayons entre R1 et R2, R2 représentant alors un rayon minimal).

Notamment, lesdits moyens de retenue peuvent présenter au moins une portion s'étendant le long d'un bord latéral desdites dents, de façon à former une paroi latérale empêchant lesdites graines de basculer sur côté desdites dents.

En évitant un tel basculement, en particulier au moment de la libération de la graine, on assure une chute plus efficace et précise de chaque graine, selon la direction verticale souhaitée, en supprimant ou limitant fortement les risques de décalage latéral, et de chocs et de rebonds contre les bords de la canule ou de l'élément dans lequel les graines sont libérées. On obtient ainsi une chute directe, sans contact, et en conséquence une précision de semis amélioré, le temps de chute étant égal pour chaque graine, et la chute s'effectuant selon l'axe souhaité.

Selon un autre aspect de l'invention, ces moyens de retenue (ou au moins la partie en appui sur la périphérie de la roue) sont mobiles entre deux positions :
- une position de retenue d'une graine, dans laquelle lesdits moyens de retenue sont plaqués contre ladite roue ; et
- une position de libération d'une graine, dans laquelle au moins une extrémité desdits moyens de retenue est éloignée de ladite roue,
des moyens d'actionnement assurant un déplacement temporaire desdits moyens de retenue de ladite position de retenue vers ladite position de libération.

Ces moyens de retenue mobiles, qui sont adaptés pour retenir une graine prélevée dans l'espace de réserve dans la dent, maintiennent celle-ci au contact de la roue plus longtemps que si elle chutait directement, sous l'effet de la gravité.

Ils passent d'une position de retenue, qui est de préférence une position par défaut, ou « de repos » (c'est-à-dire que, en l'absence de sollicitation, les moyens de retenue sont dans ou reviennent vers la position de retenue) à une position de libération, dans laquelle au moins leur extrémité libre est éloignée de la roue, permettant la libération de la graine au moment voulu.

Le passage temporaire de la position de retenue à la position de libération est assuré par des moyens d'actionnement, qui peuvent notamment être des moyens dédiés ou les dents elles-mêmes (une dent suivante venant par exemple déplacer les moyens de retenue.

Ceci assure une synchronisation de la libération des graines, et une libération à un emplacement et/ou un instant où lesdites graines ne sont plus soumises qu'à la force de gravité.

La position de retenue peut être obtenue par précontrainte des moyens de retenue et/ou via des moyens de rappel. C'est ainsi la position standard, ou de base, des moyens de retenue mobiles, vers laquelle ils tendent naturellement à revenir. Dans cette position de retenue, les moyens de retenue mobiles sont naturellement en contact avec la roue, empêchant ainsi la graine présente dans la dent de s'échapper et de chuter. En d'autres termes, dans la position de retenue, les moyens de retenue définissent avec la dent une zone à l'intérieur de laquelle la graine se trouve confinée jusqu'à ce que la position de libération de la graine soit atteinte.

La position de libération suppose une action de déplacement, ou de décalage, sur les moyens de retenue pour les déplacer temporairement et les éloigner de la roue (passant de la position de retenue à la position de libération), et donc de libérer la graine qui était retenue.

Selon certains modes de réalisation, les moyens de retenue peuvent être déplacés ou écartés uniquement ou essentiellement au niveau d'une partie affectée à la rangée de dents concernée. Notamment, les moyens de retenue peuvent contrôler plusieurs rangées de dents, avec des instants de libération distincts, et assurer également des fonctions de parois latérales souples (par exemple dans le mode de réalisation mettant en oeuvre un balai).

Cette action de déplacement (ou de décalage) peut notamment être mise en oeuvre par un ou plusieurs éléments solidaires de la roue, par exemple directement par les dents de la roue, dont la rotation assure une synchronisation. Dès que l'action de déplacement cesse, les moyens de retenue reviennent vers la position de retenue, c'est à dire au contact de la roue.

Selon un mode de réalisation particulier, lesdits moyens de retenue assurent en conséquence la libération d'une graine qu'après que ladite graine est passée sous un axe horizontal passant par l'axe de rotation de ladite roue.

Lesdits moyens de retenue peuvent comprendre au moins un élément mobile et précontraint vers la roue de façon que, dans ladite position de retenue, une portion dudit élément mobile s'étende le long d'une portion de la périphérie de ladite roue, selon le sens de rotation de ladite roue.

Selon une approche particulière, à un instant et/ou un emplacement précédant celui où lesdites graines ne sont plus soumises qu'à la force de gravité, ledit élément mobile forme avec au moins une desdites dents formant godets de ladite roue, un couloir de maintien desdites graines.

Ainsi, les graines sont maintenues dans le « couloir » (ou « tunnel ») jusqu'à ce que l'extrémité libre de l'élément mobile soit éloignée de la roue. A cet instant, la graine peut s'échapper du « couloir » par gravité, sous l'effet de son propre poids uniquement, et tomber de manière sensiblement verticale dans le conduit de transfert.

Selon un mode de réalisation particulier, lesdits moyens d'actionnement sont formés par ou comprennent lesdites dents. Ainsi, un déplacement dudit élément mobile, de ladite position de retenue vers ladite position de libération d'une graine, est contrôlée et/ou assurée par les dents, par exemple une dent suivant, selon le sens de rotation, la dent contenant une graine qui doit être libérée, ou directement cette dernière.

Ledit élément de retenue comprend au moins un premier balai comprenant un assemblage de poils dont au moins la partie libre s'étend sensiblement tangentiellement à la roue et sensiblement verticalement.

Ces poils ne s'étendent pas radialement à la roue, ni sensiblement parallèlement à l'axe de rotation de la roue. Ils s'étendent sensiblement tangentiellement à la roue, « couchés dans le sens de la rotation ».

Ainsi, certains poils du balai peuvent s'étendre au-dessus du godet, tandis que d'autres poils viennent dans la zone comprise entre la roue et les parois du dispositif de régulation, et/ou en contact avec le moyeu de la roue, formant ainsi le « couloir» de maintien des graines.

Selon une mise en oeuvre particulièrement, ladite roue comprend au moins deux rangées de dents formant godets.

La présence d'au moins deux rangées de dents permet de réaliser un dispositif de régulation compact, car il permet de transporter au moins deux fois plus de graines qu'un dispositif comprenant une unique rangée, et de réduire la vitesse de rotation nécessaire d'autant. En outre, la présence d'au moins deux rangées de dents peut jouer le rôle d'agitateur de graines dans la zone de réserve : en effet, quand une rangée de dents prélève une graine dans la zone de réserve, les autres graines de la zone peuvent être naturellement déplacées vers la ou les autres rangées de dents.

Dans le cas où ladite roue comprend deux rangées de dents formant godets, lesdites dents peuvent être disposées en quinconce les unes par rapport aux autres.

Plus généralement, quand la roue comprend plusieurs rangées de dents, ces dernières peuvent être décalées angulairement les unes par rapport aux autres de façon régulière, pour lâcher régulièrement et en alternance les graines de chacune des rangées.

Dans le cas où plusieurs rangées de dents sont présentes, ledit premier balai peut être adapté pour qu'au moins sa partie libre s'étende au-dessus desdites au moins deux rangées de dents et de l'espace entre lesdites rangées de dents.

Dans ce cas, et selon un mode de réalisation particulier, ledit premier balai peut présenter des structures différentes au-dessus dudit espace et au-dessus desdites rangées de dents.

Notamment, une surépaisseur sur ce balai peut être prévue au niveau de l'espace entre les deux rangées de dents. Cette surépaisseur présente l'avantage d'améliorer le guidage vertical, en canalisant les graines verticalement et en évitant qu'elle ne basculent. Ainsi, le lâcher des graines est plus efficace, et permet une descente bien verticale des graines, en supprimant ou à tout le moins limitant fortement les risques de rebond en aval du dispositif de régulation, notamment dans la canule de transport vers le sol. Le pourcentage de graines bien placées s'en trouve amélioré.

On peut également prévoir, selon les modes de réalisation, que le balai présente des poils de rigidité plus importante, et/ou un nombre de poils plus important, et/ou des moyens d'application d'une contrainte supplémentaire au niveau de l'espace entre les rangs.

Selon un mode de réalisation particulier, le dispositif de régulation comprend au moins un deuxième balai, comprenant un assemblage de poils dont au moins la partie libre s'étend sensiblement tangentiellement à la roue et sensiblement horizontalement au dessus de ladite roue.

Ainsi, les poils du balai empêchent la remontée des graines par l'espace libre entre les rangées de dents formant godets, leur souplesse limitant les risques de blocage de la rotation de la roue même en cas de graines mal positionnées ou en état de rebond.

On note que les notions de « premier » et « deuxième » balais mentionnés ci-dessus correspondent à l'ordre d'apparition dans la description, et non à l'ordre d'entrée en action, par rapport à une graine donnée : considérant le sens de rotation de la roue, une graine coopère d'abord avec le deuxième balai, puis avec le deuxième.

Selon un mode de réalisation particulier, lesdites dents présentent un logement apte à maintenir une graine, lors de la montée de celle-ci, et une portion plane sur laquelle ladite graine se déplace progressivement lors de la descente.

Une telle forme permet de maintenir les graines efficacement retenues dans les godets formés par les dents, même en cas de secousses.

La taille de chacun des godets peut être adaptée à la taille des graines à semer, par exemple la forme intérieure hémisphérique présente un diamètre de 8 mm à 10 mm pour les grains de maïs.

Selon un mode de réalisation particulier, lesdites dents présentent au moins une paroi latérale. Ceci permet de maintenir les graines latéralement.

Selon une caractéristique particulière, ladite rangée de dents est disposée à une distance d'une paroi dudit dispositif sensiblement inférieure au diamètre desdites graines.

Ainsi, chaque rangée de dents formant godets est placée au plus près de la paroi du boîtier (par exemple 1 mm), afin d'empêcher le passage de graines le long de cette paroi.

Selon un mode de réalisation particulier, ladite roue est entraînée en rotation par un moteur peu encombrant, situé par exemple à l'intérieur de ladite roue.

Ainsi, le dispositif de régulation forme un module consolidé capable d'être fixé sur différents types d'éléments mobiles tels que des éléments semeurs du semoir.

Le moteur est de préférence électrique, et la vitesse du moteur est asservie à la dose qui arrive des moyens de distribution et de dosage, afin d'avoir un remplissage complet des godets. Cette vitesse est de préférence proportionnelle à la vitesse d'avancement du semoir.

Selon un autre aspect particulier, ladite entrée d'alimentation présente une grille permettant à l'air de s'échapper. Ceci permet d'évacuer l'air en pression, en particulier en cas de distribution pneumatique des graines.

Selon un mode de réalisation particulier, ladite entrée d'alimentation comprend un plan incliné, dirigeant les graines vers une marche formée sensiblement à mi-hauteur dudit dispositif de régulation, de façon à ralentir les graines arrivant dans ladite zone de réserve.

Ceci permet d'éviter que des graines arrivent brutalement dans la zone de réserve, et soient par exemple projetées vers la roue à godets. En d'autres termes, on introduit un effet d'amortissement.

Selon un autre aspect particulier, le dispositif de régulation comprend une trappe de vidange.

Selon un mode de réalisation particulier, ladite roue est sélectionnée parmi une pluralité de roues adaptées chacune à une taille et une dose de graines à transporter.

Ainsi, les roues utilisées peuvent être changées, par exemple lorsque la variété ou la dose de graines à semer varie. Par exemple, les roues adaptées au maïs peuvent comprendre deux rangées de 8 godets de 7 mm de large ; les roues adaptées au blé, trois rangées de 16 godets de 5 mm de large ; et les roues adaptées au colza, trois rangées de 16 godets de 3 mm de large.

L'invention concerne également un dispositif de régulation pour un semoir tel que décrit ci-dessus, comprenant notamment des moyens de retenue mobiles retardant ladite libération de chaque graine.

### 4. Liste des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :

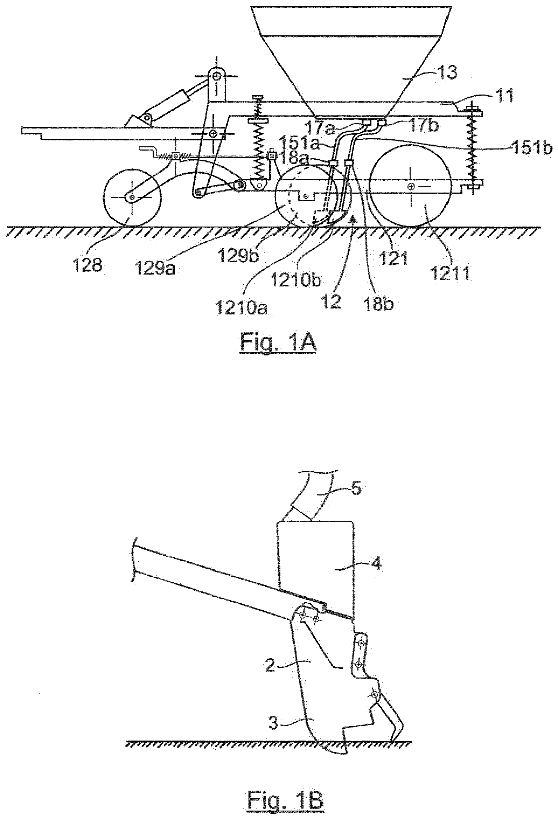

- les **figures 1A et 1B** illustrent deux exemples d'application d'un dispositif de régulation selon l'invention :
   - **figure 1A** **:** vue générale d'un élément semeur à disques d'un semoir en ligne, mettant en oeuvre un dispositif de régulation selon l'invention ;
   - **figure 1B** **:** exemple de mise en oeuvre sur un élément semeur à soc ;
- la **figure 2** est une vue schématique d'un premier mode de réalisation d'un dispositif de régulation de la distribution de graines selon l'invention, en cours de fonctionnement ;
- les **figures 3A** à **3C** sont des vues de la roue selon un premier mode de réalisation, présentant des dents adaptées pour le semis de graines de maïs :

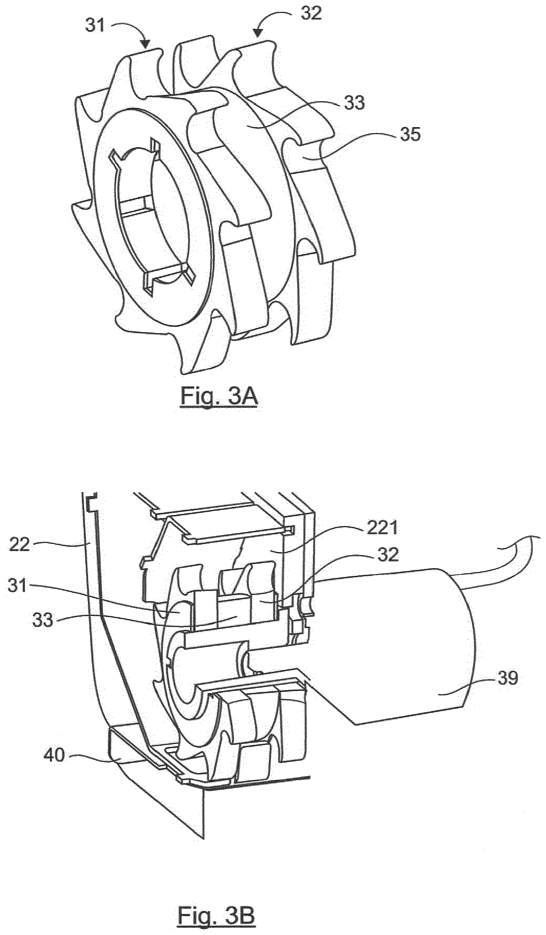

   - **figure 3A** : vue en trois dimensions de la roue ;
   - **figure 3B** : vue en trois dimensions de la roue de la figure 3A mise en place dans le dispositif de régulation ;

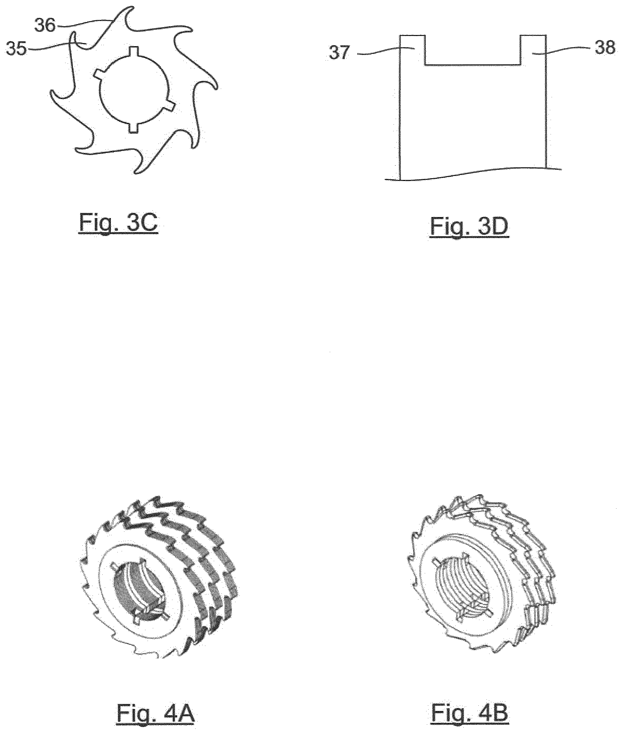

   - **figure 3C** : vue agrandie d'une dent formant godet ;
   - **figure 3D** **:** vue en coupe d'une dent ;
- les **figures 4A et 4B** représentent deux modes de réalisation alternatifs de la roue, présentant des dents prévues pour deux autres types de graines :
   - **figure 4A** : dents adaptées pour le semis de graines de blé ;
   - **figure 4B** : dents adaptées pour le semis de graines de colza ;

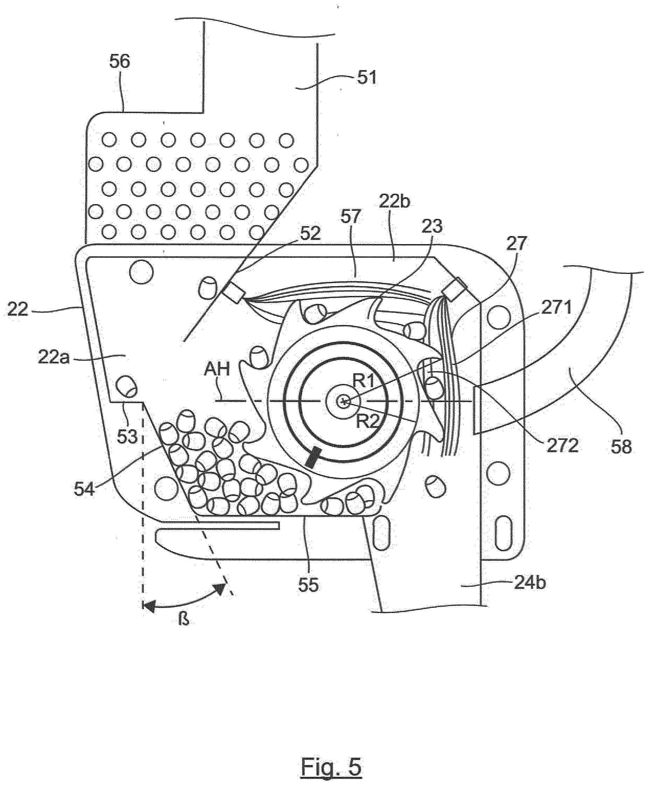

- la **figure 5** est une vue du dispositif selon un deuxième mode de réalisation mettant en outre en oeuvre un balai sensiblement horizontal ;

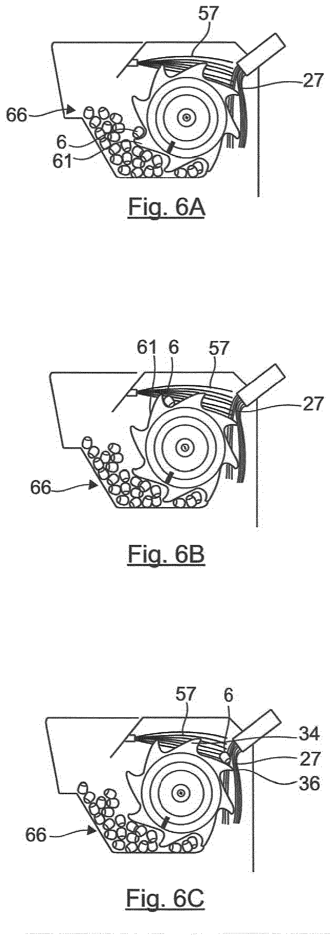

- les **figures 6A à 6C** illustrent une première partie trajet d'une graine lors de son transport par la roue dentée, sur des vues en coupe simplifiées de la figure 5 :
   - **figure 6A** : une des graines de la réserve est prise par une dent ;
   - **figure 6B** : la graine est maintenue dans la dent et entraînée vers le haut ;
   - **figure 6C** : la graine est maintenue dans la dent, en partie supérieure, par le balai horizontal ;

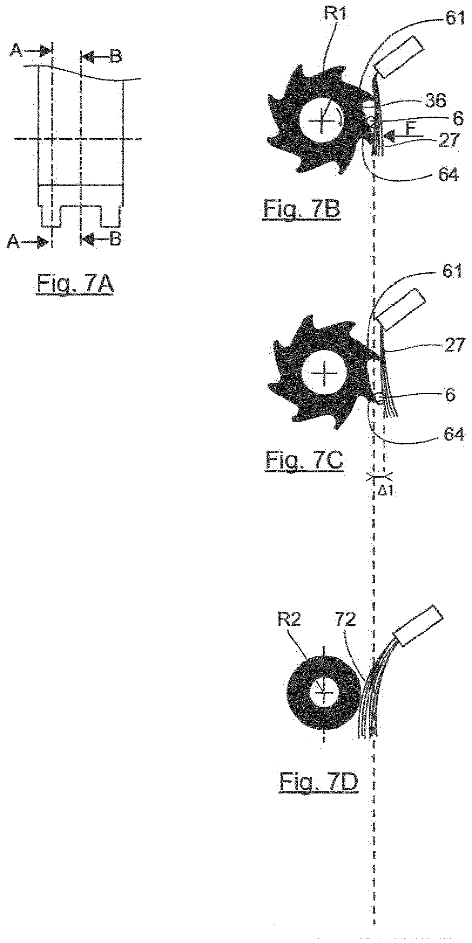

- les **figures 7A à 7D** illustrent la seconde partie du trajet d'une graine, sur des vues en section montrant en particulier le rôle du balai vertical :
   - - **figure 7A** **:** vue en coupe partielle illustrant les positions des sections AA et BB ;
   - **figures 7B et 7C** : section AA, à deux instants t0 (position de retenue) et t1 (position de libération) successifs, illustrant respectivement le retardement du lâcher et le lâcher d'une graine ;
   - - **figure 7D** : section BB, au niveau du moyeu de la roue ;

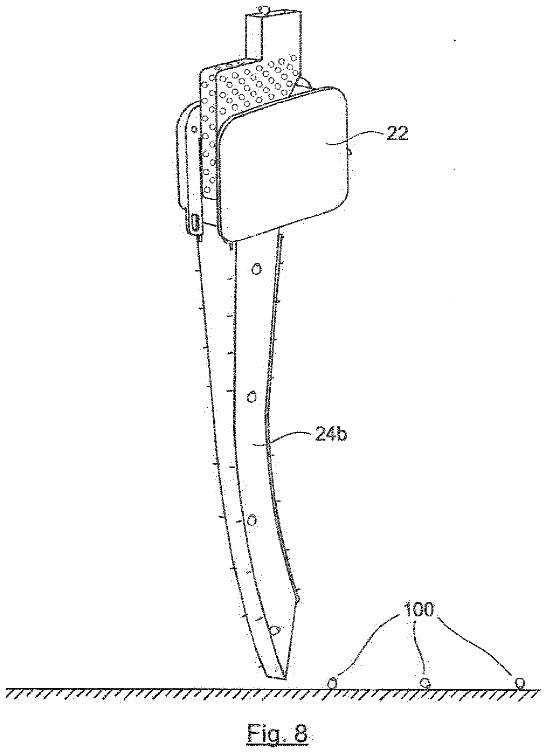

- la **figure 8** illustre la trajectoire des semences dans le conduit de transfert des graines jusqu'au sol ;

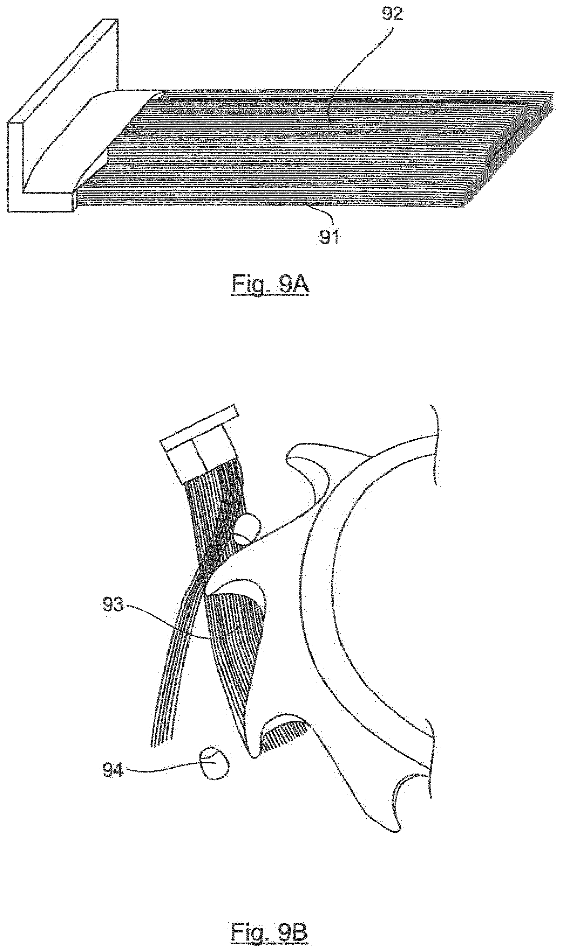

- les **figures 9A et 9B** présentent une variante de premier balai, respectivement :
   - **figure 9A** : en perspective ; et
   - **figure 9B** : monté dans le dispositif de régulation.

### 5. Description détaillée de modes de réalisation de l'invention

### 5.0 Principe général d'un semoir

Un exemple de semoir à disques mettant en oeuvre l'invention est illustré sur la **figure 1A****.** Une structure de semoir de ce type est notamment décrite dans les documents de brevet EP1212932 ou EP2060163.

Ce semoir est en appui sur le sol par l'intermédiaire des éléments semeurs 12. Sur la vue de côté de la **figure 1A**, un seul élément semeur est illustré. En réalité, plusieurs éléments semeurs similaires sont mis en oeuvre parallèlement.

Le semoir est équipé d'une trémie 13, fixée sur un châssis 11 et destinée à contenir les graines de semences. Dans le mode de réalisation illustré, la distribution des graines est assurée de façon mécanique. Des dispositifs de dosage 17a, 17b prélèvent les graines au fond de la trémie 13, par exemple à l'aide d'une roue doseuse rotative.

La distribution peut également être pneumatique. Dans ce cas, un générateur d'air comprimé fournit un courant d'air comprimé vers une tête de répartition et de distribution, et les graines prélevées par le dispositif de dosage sont insérées dans le flux d'air.

En-dessous du niveau du châssis 11, et solidaire de celui-ci, est donc installée une série d'éléments semeurs 12, dont un seul est illustré sur la **figure 1A****.**

Dans ce mode de réalisation, cet élément semeur comprend un bras porteur 121, relié au châssis 11 et portant :
- une roue d'appui au sol 128 ;
- une paire de disques semeurs 129a, 129b munis chacun d'un coutre, ou rasette, 1210a, 1210b, apte à être alimenté en semences via un conduit souple et flexible 151a, 151b et un dispositif 18a, 18b de régulation selon l'invention, décrit plus en détail par la suite ;
- une paire de rouleaux suiveurs 1211, adaptés pour rouler sur le sol et le compacter.

L'invention peut également être mise en oeuvre sur un semoir à socs, tel que décrit par exemple dans le document de brevet FR2658380. La **figure 1B** illustre un soc d'un tel semoir, classique en soi, comprenant un corps 2 à la base duquel est montée une pièce d'usure 3 profilée et arquée. La partie avant du soc est dirigée vers la gauche sur cette figure.

Selon l'invention, le soc est équipé d'un dispositif de régulation 4 (décrit plus en détail par la suite), recevant des graines depuis la trémie, de la même façon qu'expliqué précédemment, via le conduit 5. Le dispositif de régulation 4 délivre les graines de façon régulière dans le corps du soc 2, qui les dirige vers la pièce d'usure 3 qui forme un sillon.

### 5.1 Principe général de l'invention

L'invention propose une solution efficace et simple à mettre en oeuvre pour permettre une distribution plus homogène des semences, en particulier pour les semences nécessitant d'être déposées une par une dans un sillon au sol, de manière alignées et à intervalles réguliers, telles que les semences de blé, colza, maïs, betterave, pois, etc.

Le principe général de l'invention repose ainsi sur la mise en oeuvre d'un dispositif de régulation à entraînement mécanique (sans moyens pneumatiques, au niveau de ce dispositif de régulation, par opposition aux semoirs monograine), en supplément d'un dispositif de dosage et de transport (par la suite appelé dispositif de dosage) classiquement utilisé dans un semoir.

Ainsi, un semoir selon l'invention comprend à la fois un dispositif de dosage classique, positionné en sortie de trémie, et un dispositif de régulation selon l'invention, positionné en sortie du dispositif de dosage, à proximité du sol.

Dans le cas d'un semoir mettant en oeuvre une tête de répartition, recevant des graines délivrées par un doseur centralisé et dirigées vers la tête de répartition à l'aide d'un flux d'air délivré par une turbine à air, des dispositifs de régulation peuvent être associés à chaque conduit issu de la tête de répartition.

Ce dispositif de régulation est ainsi placé sur le parcours des graines entre le dispositif de dosage et les moyens de mise en terre des graines, ou moyens de semis.

Ainsi, le dispositif de régulation est placé « en coupure », ou « en série », par analogie au vocabulaire de l'électricité, sur le conduit de transfert (151a, 151b ou 5) qui relie habituellement directement le dispositif de dosage aux moyens de mise en terre. Ce conduit de transfert est donc décomposé en deux parties, une partie amont, reliant la sortie du dispositif de dosage à l'entrée du dispositif de régulation, et une partie aval reliant la sortie du dispositif de régulation aux moyens de mise en terre.

Il est à noter que cette « coupure » du conduit de transfert peut être effectuée non seulement sur un élément semeur neuf, mais également sur un élément semeur existant, pour améliorer la précision de celui-ci. Il suffit en effet de monter un dispositif de régulation selon l'invention sur le conduit de transfert existant.

Le dispositif de régulation reçoit donc les graines délivrées par le dispositif de dosage. Malgré les efforts mis en oeuvre pour l'efficacité de tels dispositifs, il arrive que les graines soient délivrées « par paquets », et qu'il y ait des moments sans graine délivrée. Le dispositif de régulation permet d'éviter ou à tout le moins de limiter ces situations, en particulier à l'aide de moyens de retenue adaptés. Il reçoit ces graines, en conserve une réserve « tampon », et les délivre aux moyens de mise en terre de façon la plus régulière possible, une à une et à intervalles réguliers, autant que faire se peut.

Le dispositif de régulation est rapproché du sol, par rapport à la position du dispositif de dosage qui se trouve au niveau de la base de la trémie, et il est de préférence placé le plus près possible du sol. Il peut notamment être fixé sur l'élément semeur, en entrée de la canule ou du soc qui dirige les graines vers le sol : le gain de régularité offert par le système est ainsi conservé lorsque les graines sont déposées sur le sol. Les graines sont ainsi semées à la suite les unes des autres, de manière régulière et unitaire ou pratiquement unitaire.

Le traitement des graines dans le dispositif de régulation est donc gravitaire, pour la prise et pour le lâcher des graines. Il est purement mécanique, et ne nécessite pas la présence de moyens pneumatiques.

Le dispositif de régulation ne doit pas être confondu avec un dispositif de dosage, qu'il complète dans la chaîne de distribution des graines, mais ne remplace pas. Les deux dispositifs n'ont pas les mêmes fonctions. Le dispositif de dosage est placé directement sous la trémie, et reçoit donc les graines directement de celle-ci, ce qui suppose une pression forte, due à la masse de graines présentes dans la trémie. Le dispositif de régulation est en revanche un élément de taille réduite, présentant par exemple une face latérale de l'ordre de 10 cm x 10 cm, et une largeur de 3 à 5 cm. Il présente une réserve de graines tampon, qui contient uniquement quelques dizaines ou centaines de graines (selon la taille de celles-ci), qui ne sont donc pas soumises à une forte pression.

Ainsi, alors que la précision en sortie (c'est-à-dire le respect d'une distribution de graines une à une avec un intervalle de temps, ou d'espace, souhaité au niveau du sol) du dispositif de dosage est généralement de l'ordre de 40%, celle en sortie d'un dispositif de régulation selon l'invention peut atteindre de l'ordre de 75% à 80%, voire plus dans certaines conditions. En d'autres termes, le dispositif de l'invention permet d'obtenir une précision proche de celle d'un semoir monograine, sans la complexité de ce dernier, et tout en offrant une polyvalence sur différents types de graines.

Pour ceci, il est important de contrôler, de façon simple et efficace, les instants de libération de chaque graine (synchronisation) et la direction de libération (chute directe, sous l'effet de la gravité, sans contact avec des parois ni rebond).

Un tel dispositif de régulation comprend donc une roue munie d'au moins une rangée de dents formant godets (aptes à porter chacune une graine à l'intérieur du godet), entraînée en rotation. Cette roue, logée dans un boîtier, puise les semences dans une réserve de graines approvisionnée par le dispositif de dosage, via une partie amont d'un conduit de transfert, et les transporte, dans ses godets, jusqu'à une partie aval d'un conduit de transfert (par exemple la canule susmentionnée).

Le dispositif comprend également des moyens de retenue, au moins un balai dans le mode de réalisation décrit, en contact avec la roue dans une position de retenue, dont le rôle est de permettre de maintenir la graine dans le godet jusqu'à ce qu'elle soit libérée sous l'effet de la pesanteur dans le canal de transfert, plutôt que d'être éjectée trop rapidement, sous l'effet de la force centrifuge. Ainsi, le balai retient la graine, dans la dent, et plus précisément, dans un mode de réalisation particulier, dans un espace intermédiaire formant une « zone de décompression », la graine étant sortie du creux de la dent, ou godet (ce qui permet par exemple d'éviter le coincement d'une graine au creux d'une dent trop fermée), et retarde sa libération, de façon qu'elle ne soit libérée au moment voulu, notamment (au plus tôt) qu'après qu'elle a dépassé une droite horizontale passant par l'axe de la roue.

De cette façon, la graine n'est soumise, dans sa chute, qu'à l'effet de la gravité, et chute verticalement, autant que faire se peut. Elle n'est pas soumise à des déviations ni à la force centrifuge, en sortant tôt de la dent, ce qui risquerait d'entraîner des rebonds sur les bords de la canule, et donc des décalages de position et/ou des retards.

Ces moyens de retenue assurent également un contrôle de la direction de la chute de la graine, en évitant que la graine ne bascule à droite ou à gauche de la dent. Pour ceci, les moyens de retenue forment une paroi latérale souple, le long d'au moins un des bords des dents.

Un mécanisme adapté peut assurer l'éloignement temporaire des moyens de retenue, ici du balai (ou au moins de certains poils de celui-ci), pour qu'ils prennent une position de libération et s'écartent suffisamment de la roue pour libérer la graine au moment de libération souhaité, pour synchroniser de façon optimisée les lâchers de graines.

Dans ce cas, des moyens d'actionnement agissent sur les moyens de retenue pour qu'ils passent, aux instants voulus, de la position de retenue à la position de libération. Les moyens de retenue peuvent être formés, montés et/ou précontraints de façon que la position de retenue soit une position de repos, ou par défaut (en l'absence de sollicitation des moyens d'actionnement). Il peut par exemple s'agir d'éléments montés sur la roue, et venant soulever régulièrement les moyens de retenue, ou des moyens indexés sur la roue, et agissant sur les moyens de retenue pour les placer dans la position de retenue.

Selon une approche efficace, cet éloignement temporaire est assurée directement par une dent, notamment celle qui contenait la graine, dans le mode de réalisation illustré, ou une dent suivante selon le sens de rotation, dans une variante possible, dont la partie supérieure (partie la plus éloignée de l'axe de rotation de la roue) vient pousser et déplacer les poils du balai, et plus généralement les moyens de retenue. Ce sont ainsi les dents qui contrôlent le débattement des poils du balai.

### 5.2 Eléments constituant le dispositif de régulation

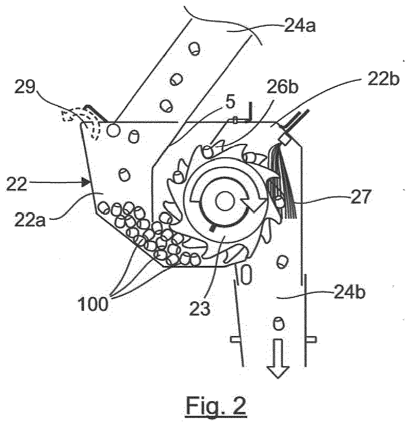

Les différents éléments du dispositif de régulation 1 selon un premier mode de réalisation sont illustrés sur la **figure 2**, qui représente le système en cours de distribution de graines. Ce dispositif de régulation, de faible encombrement, peut facilement équiper un élément semeur traditionnel muni d'un dispositif de dosage classique, de manière à améliorer la précision et le rendement de l'opération de semis.

Le dispositif de régulation est formé d'un boîtier 22 comprenant deux compartiments 22a, 22b communicants entre eux. Le premier compartiment 22a forme une réserve de graines, dite « réserve tampon », où s'amassent des graines 100 en provenance du doseur (non représenté), tandis que le deuxième compartiment 22b abrite une roue 23 à godets, venant puiser les graines 100 une à une dans la réserve tampon.

Les graines 100 arrivent, dans ce premier mode de réalisation, depuis le doseur jusqu'au premier compartiment 22a du boîtier 22 via une partie aval du conduit de transfert 24a, solidarisée sur le haut du boîtier 22, et reliée à une partie amont du conduit de transfert 24b (ou directement à la partie supérieure de la canule ou du soc).

La partie aval 24a est ici orientée (au voisinage du boîtier) selon une direction opposée au sens de rotation de la roue 3, par exemple selon un angle α compris entre 15° et 35° par rapport à la verticale. Ceci permet de ralentir et guider les graines, en coopération avec une paroi 25, prolongeant la partie aval tout d'abord avec l'angle a, puis verticalement. Cette paroi 25 isole la zone d'arrivée des graines de la roue 23, le compartiment 22a comprenant donc une zone d'arrivée des graines et une zone de préhension des graines.

Les graines sont ainsi dirigées vers la zone de préhension sans interférer avec le remplissage des godets de la roue 23. Il est en effet souhaitable d'éviter, ou à tout le moins de limiter, les rebonds de graines arrivant dans la réserve tampon, et en particulier que des graines viennent se loger en doublon dans une dent, ou viennent percuter et éjecter une graine présente dans une dent.

Une ouverture 29 peut être prévue, en partie supérieure du boîtier, pour permettre l'évacuation de l'air, notamment en cas d'alimentation pneumatique. Des moyens complémentaires (non représentés) formant « chaussette » peuvent permettre de diriger l'air, éventuellement chargé de poussière, vers le sol.

Selon un autre mode de réalisation, illustré par **la** **figure 5**, la partie amont 51 du conduit amenant les graines délivrées par le dispositif doseur est sensiblement verticale. Les graines arrivent sur un plan incliné 52, formant par exemple un angle de l'ordre de 35 à 50° avec l'axe vertical défini par la partie amont 51 du conduit. Ce plan incliné 52 dirige les graines vers une marche 53, sensiblement horizontale, qui se prolonge vers le bas par un second plan incliné 54, formant également un angle β de l'ordre de 35° à 50° avec la verticale (les deux plans inclinés 52 et 54 formant entre eux un angle compris entre 80 et 100°).

La marche 53 et le second plan incliné 54 peuvent être formés dans une même pièce, et se prolonger par une partie de fond 55, s'étendant le cas échéant sous la roue 23, et définissant sensiblement la réserve tampon, dont le niveau de remplissage optimal correspond sensiblement à la position de la marche 53.

Le plan incliné 52, puis la marche 53, absorbent une partie importante de l'énergie accumulée par la graine lors de sa chute. Il y a ainsi peu d'effets de rebonds, et la saisie des graines par la roue 3 n'est pas, ou peu, perturbée.

Cette marche (et éventuellement d'autres éléments) peut être réalisée en, ou peut porter, un matériau amortisseur.

On peut noter qu'une portion 56 d'extrémité de la partie amont 51 du conduit présente une grille munie d'ouvertures permettant d'expulser l'air, notamment si le transfert des graines est assuré de façon pneumatique. Ainsi, l'air sous pression est éjecté avant le dispositif de régulation, et ne perturbe pas le fonctionnement de ce dernier, ni la circulation des graines dans la partie aval du conduit. Ceci est en particulier important pour les graines de petite taille, notamment pour les graines de colza.

Le plan incliné 52 peut s'étendre dans le prolongement de cette portion 56.

Une arrivée 58 d'un produit complémentaire, ne nécessitant pas de régulation précise, par exemple pour un produit anti-limaces, peut être prévu (dans les différents modes de réalisation). Il est par exemple monté sur le boîtier de façon que ce produit soit délivré au-dessus de la partie amont du conduit de transfert 24b. Pour éviter que ce produit complémentaire n'interfère avec les graines lâchées, l'arrivée 58 peut être montée en face du moyeu de la roue 23, dans le cas où celle-ci porte deux rangées de dents.

Une trappe de vidange 40 (**figure 3B**) peut également être prévue pour vider le dispositif, et par exemple pour débarrasser le boîtier 22 des semences endommagées, ou n'ayant pas été recueillies par la roue 23.

Selon une variante de mise en oeuvre, cette trappe 40 (ou le cas échéant une autre trappe) peut déboucher directement ou indirectement dans la canule. Ceci permet de court-circuiter le dispositif de régulation, les graines traversant la zone de réserve et débouchant directement dans la canule (dont la partie supérieure est adaptée pour s'étendre sous la trappe), sans transiter par la roue, sans qu'il soit nécessaire de démonter ce dispositif de régulation. Ceci peut notamment être adapté à certains types de graines ne nécessitant pas, ou étant non adaptées, à une distribution via la roue du dispositif de régulation (« ray grass » par exemple) et/ou pour des forts débits ne nécessitant pas de régulation.

Par exemple, la trappe peut coopérer avec un clapet mobile, s'étendant sensiblement verticalement lorsque la trappe est fermée, pour former une portion supérieure de la paroi classique de la canule, et se déplaçant et s'inclinant lorsque la trappe est ouverte, pour former, avec les joues prolongées de la canule, un entonnoir recevant les graines directement depuis la zone de réserve.

Ainsi, selon cette approche, il est possible de ne réguler qu'en cas de besoin.

Un exemple de roue 23, adaptée notamment aux graines de maïs, est représentée, seule, en trois dimensions sur la **figure 3A****.** Elle est également représentée mise en place dans le deuxième compartiment 22b du boîtier 22 sur la **figure 3B****.**

Cette roue 23 comprend au moins une rangée de dents formant godets. Selon un mode de réalisation particulier de l'invention, la roue 23 comprend deux rangées de dents 31, 32 formant godets positionnées de part et d'autre d'une rainure centrale, définie par les bords des rangées de dents et le moyeu, 33. Cette rainure centrale présente une largeur par exemple supérieure ou égale à 1,5 fois la taille d'une graine, pour qu'une telle graine pénétrant dans l'espace défini par cette rainure ne puisse pas s'y coincer, et être entraînée et distribuée de façon surnuméraire. Cette largeur importante permet que la graine se retrouve redirigée vers la réserve, et non entrainée.

La présence de deux rangées 31, 32 de dents permet de réaliser un dispositif de régulation compact, sans que la vitesse de rotation soit trop élevée, car il peut ainsi transporter deux fois plus de graines qu'un dispositif comprenant une unique rangée. En outre, la présence de deux rangées de dents formant godets joue le rôle d'agitateur de graines dans la zone de réserve : en effet, quand une rangée de dents prélève une graine dans la zone de réserve, les autres graines de la zone sont naturellement poussées vers l'autre rangée de dents.

Chaque rangée de dents formant godets 31, 32 est décalée angulairement, autrement dit positionnée en quinconce, pour ne pas nuire à la régularité de distribution des graines. Par exemple, le décalage angulaire peut être égal à 360/nombre total de godets.

Les dents de la roue 23 présentent chacune une cavité, ou logement, 35 formant godet, ou réceptacle. C'est-à-dire qu'elles présentent de préférence une forme spécifique, dont un exemple pour le maïs est illustré sur la **figure 3C**, leur permettant ainsi de recueillir une graine dans la réserve de graines, par exemple à la manière d'une cuillère.

Les dents peuvent présenter en particulier une forme incurvée, par exemple sensiblement sphérique (ou en cuvette), assurant que la graine reste « emprisonnée » dans le godet même en cas de secousses ou vibrations (contrairement aux systèmes de type diabolo ou centrifuge existants, desquels les graines peuvent être éjectées en présence de secousses et/ou de vibrations).

Le dos 36 de la dent peut être sensiblement plan, formant un toboggan, par exemple de 15 à 25 mm de long, sur lequel la graine va se déplacer progressivement lorsqu'elle sort du réceptacle 35, tout en retenant et retardant la chute de la graine, en coopération avec le balai 27, tel que décrit par la suite. Ainsi, avant la chute de la graine, celle-ci sort progressivement du creux de la dent, mais reste maintenue sur le dos de la dent précédente, jusqu'au moment souhaité pour la libération, et donc la chute gravitaire. Les graines sont également retenues latéralement, par les poils de côté du balai.

Vue en largeur (comme illustré sur la coupe de la **figure 3D**), chaque dent peut présenter, sur tout ou partie de sa longueur au moins une paroi latérale 37, 38, présentant par exemple une hauteur comprise entre 1 et 3 mm, participant au maintien de la graine. Dans le cas d'une grosse graine, par exemple de maïs, une seule paroi latérale peut être prévue, du côté du moyeu de la roue. Pour des graines plus petites, une paroi de chaque côté peut être mise en oeuvre. Les dimensions, hauteur et épaisseur des parois, peuvent être adaptées aux différents types de graines.

Par ailleurs, la roue 23 est de préférence faite d'un matériau souple peu agressif pour des graines fragiles (par exemple les graines de colza), par exemple en polyuréthane.

Des roues de formes et/ou de tailles différentes, au nombre de godets variable, ou faites d'autres matériaux, peuvent être utilisées selon le type et les dimensions des graines à distribuer. Le boîtier 22 peut à cet effet comporter un flasque apte s'ouvrir sans outil de façon à remplacer facilement les roues.

Ainsi, les **figures 3A à 3C** illustrent un premier mode de réalisation de la roue 23 adaptée au semis de graines de maïs, selon lequel la roue comporte 2 rangées de 8 godets chacune, les godets présentant une épaisseur de 6 à 7 mm.

Les **figures 4A et 4B** illustrent deux autres modes de réalisation de la roue 23, dans lesquels les roues sont respectivement adaptées au semis de blé et de colza. Comme illustré sur la **figure 4A**, une roue à trois rangées de seize godets chacune, présentant chacun une épaisseur de 5 mm environ, est particulièrement adaptée au semis de blé. Une roue à trois rangées de seize godets, présentant chacun une épaisseur de 3 mm, est plutôt destinée au semis de colza (**figure 4B**). Les précisions données par la suite pour une mise en oeuvre avec deux rangées de dents peuvent bien sûr être généralisées à ce cas à trois rangées, voire plus.

La pointe des dents, définissant la périphérie de la roue, présente un rayon R1 et le moyeu, définissant notamment le fond de la rainure entre deux rangées de dents, de préférence tel que R1-R2 est compris entre 4 et 16 mm, selon les roues adaptées aux différents formats de graine.

Comme représenté sur la **figure 3B**, la roue est montée dans le deuxième compartiment 22b du boîtier 22 de manière que chaque rangée de godets 31, 32 soit placée au plus près des parois 221 du boîtier (par exemple avec un espace de l'ordre de 1 mm), afin d'éviter que des graines passent et/ou se coincent le long de ces parois. De la même manière, l'espace sous la roue est réduit (par exemple, pas plus de 2 mm) de manière à empêcher le passage des graines vers le conduit de transfert 24b, ainsi que les coincements de débris, bouts de paille, etc. Afin de réduire encore davantage les risques, un balai supplémentaire (non visible sur les figures) peut également être prévu en partie inférieure du boîtier.

Un moteur 39, par exemple de type électrique, entraîne la roue 23 en rotation. Il peut être logé intégralement ou partiellement à l'intérieur de la roue 3 formant avec le boîtier 22 un module compact pouvant être facilement monté sur des éléments semeurs.

Selon un mode de réalisation particulier de l'invention, il tourne à des vitesses relativement faibles, comprises par exemple entre 10 et 100 tours par minute. Cette vitesse peut être asservie à la dose de graines distribuées par le doseur afin que les godets soient toujours remplis. Par exemple, le niveau de semence dans la réserve tampon pourra être égal à environ 4 à 8 fois le nombre de godets.

Dans un autre mode de réalisation, plusieurs (voire tous les) dispositifs de régulation peuvent être entraînés par un seul moteur. Dans ce cas, les axes des roues des différents dispositifs sont avantageusement alignés.

Pour le maïs, la réserve contient par exemple, en moyenne, une centaine de graines. Toutefois, le dispositif de régulation, même s'il est conçu pour distribuer les graines une à une régulièrement, peut accepter des situations de doublons (graines groupées par deux ou plus) ou de manques (graine absente) le cas échéant. Il est ainsi très tolérant aux variations de charge, et ne se bloque ni en cas de surcharge ni en cas de sous-charge de la réserve. Des essais montrent qu'un tel dispositif de régulation peut accepter des surdoses fortes, de 1,5 voire 2 fois la dose prévue. Dans une telle situation, un nombre élevé de doublons sera délivré, mais le dispositif ne se bloquera pas.

Par ailleurs, l'entraînement de la roue 23 peut être lié à l'avancement du semoir, de manière proportionnelle. Ceci offre la possibilité à l'agriculteur de moduler ou couper automatiquement et instantanément la distribution si besoin (cela peut être le cas dans les extrémités de parcelles, ou dans les virages, etc.). Les graines résiduelles transportées dans le canal de transfert se trouvent alors bloquées dans la réserve tampon et ne sont sélectionnées que lorsque le semoir (et donc la roue) se met à nouveau en marche.

Ceci est un avantage par rapport aux systèmes actuels, notamment les semoirs à transport pneumatique, qui disposent toujours d'une quantité de graines en transit dans les conduits, continuant à s'écouler jusqu'à vidange complète, et ce malgré l'arrêt du semoir. Dans ce cas, les graines tombent au sol où elles s'amassent.

Il peut arriver que des graines 100 soient entraînées par la roue 23 sans toutefois être placées dans une des dents formant godet. Par exemple, dans le mode de réalisation de la **figure 2**, une graine peut se loger et être entraînée entre les deux rangées de dents 31, 32 au niveau du moyeu 33). Afin de remédier à cette éventualité, on peut prévoir un éjecteur central 26, dit « décrottoir », prenant par exemple la forme d'une lame plane, s'étendant au dessus du moyeu 33. En contact avec ou à proximité de ce moyeu, entre les deux rangées de dents 31, 32, il permet de renvoyer vers la réserve tampon les graines ne devant pas être distribuées.

En complément ou dans un autre mode de réalisation, représenté sur la **figure 5**, un second balai 57 sensiblement horizontal, souple, et en contact avec le moyeu 33 et les séries de dents 31, 32 de la roue. Ce balai 57 présente l'avantage de limiter les risques de blocage du système, dus à de potentiels débris de graines se coinçant sous un élément plus rigide, comme c'est le cas du décrottoir. Au passage de la roue 3, les longs poils du balai 57 oscillent sans se soulever, et maintiennent les graines en amont de cette dernière. Dans ce mode de réalisation, le décrottoir du premier mode de réalisation peut être supprimé.

Le balai 27 (de même que le balai 57 dans le deuxième mode de réalisation) est relativement souple, mais possède toutefois une raideur suffisante lui permettant de conserver la partie de ses poils en contact avec la roue sensiblement à la verticale, ou plus précisément sensiblement radiale à la roue, par exemple par une précontrainte appliquée au niveau de la fixation du balai au boîtier du dispositif. Le balai 27 est alors dans une position de retenue, qui est sa position par défaut.

Le fait que le balai 27 soit plaqué contre la roue permet que la graine 100 soit maintenue en place sur la portion toboggan de la dent - pour ne pas s'en échapper - malgré la rotation de la roue 23, au moins jusqu'à ce que cette graine dépasse un axe horizontal AH passant par l'axe de rotation de la roue.

Le dépassement de cet axe AH correspond à l'écartement du balai 27 par rapport à la roue. Cet écartement est notamment mis en oeuvre par la portion en saillie recourbée - ou pointe - de la dent qui retient la graine et qui précède la portion en toboggan. Lorsque le balai est écarté de la roue, il n'est plus en contact avec la portion en toboggan. Le balai 27 est alors dans une position de libération, qui est une position temporaire.

Ainsi, la graine est libérée seulement après avoir dépassé cet axe horizontal AH, et chute verticalement, en étant soumise à l'effet de la gravité.

La souplesse des balais 27, 57 peut leur permettre de s'adapter à tous les types de roues et/ou de graines.

Ces balais 27, 57 pourraient le cas échéant être remplacés par une ou plusieurs lames souples, par exemple en matière plastique ou en caoutchouc.

Comme on le constate sur cette **figure 5**, une portion 271 des poils du balai 27 est en contact avec la périphérie de la roue, définie par la pointe des dents 23 (rayon R1) et une autre portion 272 des poils repose sur le moyeu, et prend place dans la rainure entre les deux rangées de dents (dans le cas où il y a plusieurs rangées de dents), selon un second rayon R2 inférieur à R1. Les poils de cette portion 272 forment une paroi latérale, empêchant les graines de basculer latéralement, et garantissant une chute selon l'axe vertical souhaité.

Sur cette **figure 5** (de même que sur d'autres figures) le nombre de poils est très réduit, par simplification et pour faciliter la lecture. En pratique, bien sûr, les balais auront généralement un nombre de poils beaucoup plus élevé.

En complément ou en variante, le premier balai peut présenter une structure adaptée, notamment pour présenter une surépaisseur au niveau de la rainure entre les deux rangées de dents. Comme illustré sur la **figure 9A**, le balai comprend un premier ensemble de poils 91, s'étendant sensiblement sur toute la largeur correspondant au deux rangées et à la rainure centrale et un second ensemble de poils 92 en position centrale, formant une surépaisseur au niveau de la rainure.

Comme on le voit sur la **figure 9B**, les poils au niveau de la rainure, comprenant l'épaisseur des deux ensembles de poils 91 et 92, forment une paroi latérale 93 renforcée, empêchant la graine 94 de basculer, et assurant que le lâcher et la descente de celle-ci soit bien verticale, sans décalage latéral et donc possible rebond contre une paroi de la canule. On améliore ainsi le pourcentage de graines bien placées au sol.

En variante, la forme, le type, la rigidité et/ou le nombre de poils (ou plus généralement des moyens de retenue) peuvent varier selon que l'on se trouve au-dessus des dents ou de la rainure. Il est également possible de combiner trois balais distincts, respectivement au-dessus des rangées de dents et de la rainure.

Le dispositif de régulation peut être disposé à proximité du sol, par exemple sur l'élément de semis lui-même. Ainsi, le conduit de transfert 24b des graines jusqu'au sol, illustré sur la **figure 8**, présente une longueur modérée (par exemple 30 à 40 cm) permettant d'accompagner les graines sans perturber l'espacement régulier entre celles-ci. Il peut présenter une surface lisse sans aspérité ne venant pas perturber la descente gravitaire des graines.

Un dispositif de régulation selon l'invention permet de contrôler la dose de graines semées pour chaque rang. Dans certains cas, des dispositifs de régulation peuvent n'être présents que sur certains rangs seulement (par exemple 1 sur 5), les autres rangs étant fermés (sans semence). Ceci peut notamment permettre d'adopter un écartement entre rang identique à celui d'un semoir monograine. En effet, , les semoirs classiques délivrent une graine tous les 12,5 cm, alors qu'un semoir monograine délivre une graine tous les 75 cm. L'invention permettant de s'approcher efficacement de la précision d'un semoir monograine, il peut être souhaitable d'utiliser le même écartement entre les graines.

Comme illustré sur la **figure 8**, les graines 100 sont enfin déposées à intervalles réguliers sur le sol, la longueur modérée (de l'ordre de 30 cm par exemple) du canal de transfert 24b ne perturbant pas leur transport.

Bien sûr, les caractéristiques spécifiques ou variantes décrites en correspondance avec l'un des modes de réalisation peuvent être adaptées et/ou mises en oeuvre dans un autre mode de réalisation.

### 5.3 Fonctionnement

On décrit ci-après le fonctionnement du dispositif de régulation selon l'invention, à l'aide des **figures 6A à 7D****.**

Les **figures 6A à 6C** illustrent une première partie du trajet d'une graine 6, de la préhension dans un ensemble 66 de graines présentes dans la zone tampon jusqu'à la partie supérieure du boîtier. Les **figures 7B à 7D** sont des vues en section, telles que définies sur la **figure 7A**, illustrant une seconde partie du trajet de la graine 6, jusqu'à son lâcher. Sur ces figures, pour les besoins de l'explication, une seule graine 6 est présentée, dans différentes positions successives. Bien sûr, en pratique, chaque dent porte une graine.

Les graines 100 présentes dans la trémie sont donc dosées et distribuées par un dispositif de dosage (non représenté). Elles arrivent de manière plus ou moins irrégulière au niveau de la zone 22a du boîtier 22 du dispositif de régulation par la partie amont du conduit 24a (figure 2). Les semences 100 sont recueillies, en continu, au niveau de la réserve tampon où elles s'accumulent (66).

Les dents 31, 32 formant godets de la roue 23 (en rotation) viennent tour à tour puiser une graine dans la réserve tampon.

La dent 61, lorsqu'elle est dans la partie inférieure du boîtier 22, traverse l'ensemble de graines 66 et sélectionne (ou attrape) une graine 6, comme illustré sur la **figure 6A****.**

Dans ce mode de réalisation, on met donc en oeuvre un balai « horizontal », dit deuxième balai 57, flexible, positionné en partie supérieure du boîtier 22. Sa base est dirigée en direction de la roue (par exemple sensiblement radialement) tandis que les poils sont dirigés vers la roue, et se placent sensiblement horizontalement contre la roue 23 (comme illustré sur la **figure 5**).

Après environ 1/4 à 2/3 de rotation de la roue 23, la graine 6, prélevée dans la réserve, arrive ainsi en contact avec les poils du balai « horizontal » 57, comme visible sur la **figure 6B****.** Pendant 1/6 à 1/4 de tour supplémentaire, elle est maintenue dans un « tunnel » (ou une cavité) formé par le rayon interne de la dent 61 dans laquelle elle est placée, le dos de la dent 64 précédant la dent 61, et les poils du balai 57.

Puis, toujours maintenue par le dessus et sur les côtés par des poils du balai 57, la graine 6 glisse sur la surface formant toboggan de la dent précédente 64, comme illustré sur la **figure 6C****.** Ce toboggan forme ainsi une « zone de détente », qui permet une sortie le plus tôt possible du logement de la dent, dont la forme est adaptée en conséquence. On évite ainsi des blocages de graines dans ce logement, en particulier lorsque plusieurs graines ont été saisies en même temps.

La graine 6 continue de glisser sur le toboggan, jusqu'à venir en contact avec le balai « vertical » 27, dit premier balai, qui peut être identique ou similaire au premier balai 57. On rappelle que ce deuxième balai (plus généralement élément de retenue mobile) est un élément essentiel de l'invention, alors que, dans certains modes de réalisation, il est possible de s'affranchir du premier balai.

L'aspect essentiel de l'invention est en effet le retardement de la chute des graines, de façon à améliorer la régularité et la synchronisation de la distribution, et la précision de celle-ci, en assurant une chute sous le seul effet de la gravité.

Le balai 27 est disposé et contraint de manière que ses longs poils exercent un effort contre la roue permettant de maintenir une graine 6 contre la surface d'une dent. Ainsi, la balai 27 permet de maintenir la graine 6 au moins jusqu'à un point de la rotation de la roue où la force de gravité permet à la graine de s'échapper à la verticale dans le conduit de transfert aval 24b (la graine ayant donc franchi l'axe horizontal AH passant par l'axe de rotation de la roue).

Pour cela, les poils du balai 27 peuvent couvrir au moins la largeur totale de la roue 23, incluant les deux rangées de dents 31, 32 formant godets, ainsi que le moyeu 33. Les poils du balai 27 peuvent également s'étendre sur les côtés de la roue et dans la partie centrale définie par le moyeu, pour empêcher que la graine 6 s'échappe ou se déplace latéralement, formant une sorte de tunnel souple pour la graine, défini par le creux et le dos de la dent, et les poils du balai, au dessus et sur les côtés de la dent.

Ainsi, certains poils du balai 27 (situés de part et d'autre des rangées de dents 31, 32) peuvent former sensiblement deux parois latérales de guidage de la graine 100, pendant que d'autres poils (situés à hauteur des rangées de dents 31, 32) forment une troisième paroi destinée à être repoussée par le passage de la dent et de la graine.

Au contraire d'un tunnel « solide » (par exemple formé par une paroi rigide), ce tunnel « souple » (ou encore évolutif, ou mobile) ne pose pas le risque, par exemple, qu'une pelure de graine se détache et se coince dans le tunnel, bloquant le mécanisme, tout en évitant le basculement latéral d'une graine.

Ce fonctionnement est plus précisément illustré sur les **figures 7A à 7D****.** La **figure 7A** présente une vue en coupe d'une roue, faisant apparaître les sections commentées par la suite :
- section AA : au niveau d'une rangée de dents 31 ;
- section BB : au niveau du moyeu 33.

Les **figures 7B et 7C** illustrent la section AA à deux instants successifs t0 et t1, correspondant respectivement à la position de retenue dans laquelle le balai 27 est maintenu plaqué contre la roue et à la position de libération dans laquelle le balai 27 est au moins légèrement éloigné de la roue.

Partant de sa position à la figure 6C, la graine 6, a glissé sur la partie plane 36 du dos de la dent précédente 64. En l'absence du balai 27, ou d'un moyen de retenue fonctionnellement similaire, on comprend que, à l'instant t0 (**figure 7B**), la graine 6 aurait déjà quitté la dent, et chuterait de façon mal contrôlée, sous l'effet de la gravité d'une part et de la force centrifuge due à la rotation de la roue et à la direction du dos de la dent. La chute ne serait pas purement verticale, et le temps de chute et la position finale ne seraient pas précisément maîtrisés.

Le balai 27, qui est soumis à une précontrainte F tendant à plaquer les poils contre la roue, maintient la graine 6 sur le dos 36 de la dent, retardant sa chute. Ceci correspond à la position de retenue. Sur les illustrations, pour des raisons de lisibilité, seuls quelques poils sont illustrés. En pratique, le nombre de poils est plus élevé.

La libération de la graine intervient donc de façon différée, ou retardée, à l'instant t1, dans la position de libération (**figure 7C**). Dans cette position, le balai 27, et notamment sa partie libre, s'est légèrement décalé vers la droite (débattement Δ1), alors que la dent s'est progressivement décalée vers la gauche. Le balai 27 n'est donc plus au contact de la roue à l'emplacement où la graine doit être libérée. La graine 6 n'est plus soumise qu'à son propre poids et à l'effet de la force de gravité : elle poursuit donc son trajet à la verticale, dans le conduit de transfert 24b.

Le décalage des poils peut être assuré, au moins en partie, par l'action de la dent suivante 61, dont la pointe vient en appui sur les poils, et les repoussent (vers la droite sur la **figure 7C**), facilitant la chute de la graine 6. Ce mécanisme contrôle la synchronisation de la libération des graines, chaque libération étant actionnée par une dent (par la dent suivante, et plus précisément par la pointe formant la partie supérieure du logement de la graine considérée, dans le mode de réalisation illustré). Dans le cas où plusieurs rangées de dents sont prévues, les poils sont suffisamment souples et indépendants pour assurer un traitement différencié de chaque rangée (une partie des poils étant associée à une rangée donnée).

Dans ce mode de réalisation, ce sont donc les dents qui contrôlent le passage progressif de la position de retenue à la position de libération, et le retour à la position de retenue. Dans des variantes, d'autres moyens d'actionnement du déplacement sont envisageables, de préférence contrôlés par la rotation de la roue, pour assurer la synchronisation.

Selon les modes de réalisation, le débattement Δ1 peut être plus ou moins important, voire nul ou quasi-nul dans certains cas particuliers.

La **figure 7D** illustre par ailleurs la situation au niveau du moyeu 33 (section B). Certains poils 72 du balai viennent en contact permanent avec le moyeu, dans la rainure centrale s'étendant entre les deux rangées de dents. En se référant à la coupe de la figure 7A, on comprend que ces poils 72 s'étendent donc sur le côté des dents, formant une paroi latérale, maintenant latéralement les graines dans la dent. Certains poils peuvent assurer un maintien latéral sur l'autre côté de la dent, formant ainsi le tunnel « souple » susmentionné. Selon les modes de réalisation, une paroi latérale similaire peut également être prévue sur l'autre bord de la dent (bord opposé à la rainure centrale).

Ce balai 27 permet donc de retarder le lâcher de chaque graine et donc de contrôler la régularité de dépose des graines 6 au sol. En effet, la graine, ainsi accompagnée dans son mouvement, n'est pas libérée avant d'avoir atteint l'entrée du conduit de transfert 24b, dans lequel elle peut être relâchée à la verticale, uniquement soumise à son propre poids. Contrairement aux solutions existantes dans lesquelles les graines sont bien souvent éjectées de la roue dans le conduit, soumises à la force centrifuge, la solution proposée par l'invention permet un lâcher synchronisé des graines et une distribution régulière, le dépôt des graines au sol n'étant plus influencé par la vitesse de la roue.

## Revendications

1. Semoir comprenant une pluralité d'éléments semeurs (12),
chaque élément semeur (12) comprenant des moyens de dosage et de transport, contrôlant le débit des graines à la sortie d'une trémie (13) et délivrant lesdites graines dans un conduit de transfert (151a, 151b, 5) pour alimenter des moyens de mise en terre desdites graines,
chaque élément semeur (12) comprenant également un dispositif de régulation (18a, 18b, 22) monté entre lesdits moyens de dosage et de transport et lesdits moyens de mise en terre, à proximité de ces derniers,
ledit dispositif de régulation (18a, 18b, 22) comprenant un espace de réserve (22a), alimentée en graines (100) via une entrée d'alimentation connectée auxdits moyens de dosage et de transport par une partie amont (24a) dudit conduit de transfert, ledit dispositif de régulation (18a, 18b, 22) comprenant une roue (23) apte à prélever des graines (100) une à une dans ledit espace de réserve (22a), au moyen d'au moins une rangée de dents formant godets, assurant chacune le prélèvement d'une graine dans ladite zone de réserve (22a) et la libération de ladite graine dans une partie aval (24b) dudit conduit de transfert, et comprenant aussi des moyens de retenue retardant ladite libération de chaque graine, dont une partie s'étend sensiblement tangentiellement à ladite roue et est souple, de façon à épouser au moins deux rayons centrés sur l'axe de rotation :
- un rayon R1 défini par la pointe desdites dents, c'est-à-dire la partie de ladite roue la plus éloignée dudit axe de rotation ; et
- au moins un rayon R2, inférieur audit rayon R1,
**caractérisé en ce que** lesdits moyens de retenue comprennent au moins un premier balai (27) comprenant un assemblage de poils, au moins une partie libre desdits poils s'étendant sensiblement tangentiellement et sensiblement verticalement à la roue (23) et épousant lesdits deux rayons R1 et R2.

2. Semoir selon la revendication 1, **caractérisé en ce que** lesdits moyens de retenue présentent au moins une portion s'étendant le long d'un bord latéral desdites dents, de façon à former une paroi latérale empêchant lesdites graines de basculer sur côté desdites dents.

3. Semoir selon la revendication 2, **caractérisé en ce que** lesdits moyens de retenue sont mobiles entre deux positions :
- une position de retenue d'une graine, dans laquelle lesdits moyens de retenue sont plaqués contre ladite roue (23) ; et
- une position de libération d'une graine, dans laquelle au moins une extrémité desdits moyens de retenue est éloignée de ladite roue (23),
et des moyens d'actionnement, assurant un déplacement temporaire desdits moyens de retenue de ladite position de retenue vers ladite position de libération.

4. Semoir selon la revendication 1, **caractérisé en ce que** lesdits moyens de retenue assurent ladite libération d'une graine qu'après que ladite graine est passée sous un axe horizontal (AH) passant par l'axe de rotation de ladite roue (23).

5. Semoir selon la revendication 1, **caractérisé en ce que** lesdits moyens de retenue comprennent au moins un élément mobile et précontraint vers la roue (23) de façon qu'une portion dudit élément mobile s'étende le long d'une portion de la périphérie de ladite roue (23), selon le sens de rotation de ladite roue (23).

6. Semoir selon la revendication 5, **caractérisé en ce que,** à un instant et/ou un emplacement précédant celui où lesdites graines ne sont plus soumises qu'à la force de gravité, ledit élément mobile forme avec au moins une desdites dents de ladite roue, un couloir de maintien desdites graines.

7. Semoir selon la revendication 3, **caractérisé en ce que** lesdits moyens d'actionnement sont formés par ou comprennent lesdites dents (31, 32).

8. Semoir selon la revendication 1, **caractérisé en ce que** ladite roue (23) comprend au moins deux rangées de dents (31, 32) formant godets.

9. Semoir selon la revendication 1, **caractérisé en ce qu'**au moins ladite partie libre dudit premier balai (27) s'étend au-dessus desdites au moins deux rangées de dents (31, 32) et de l'espace entre lesdites rangées de dents (31, 32).

10. Semoir selon la revendication 9, **caractérisé en ce que** ledit premier balai présente des structures différentes au-dessus dudit espace et au-dessus desdites rangées de dents.

11. Semoir selon la revendication 1, **caractérisé en ce que** lesdits moyens de retenue comprennent au moins un deuxième balai (57) comprenant un assemblage de poils dont au moins une partie libre s'étend sensiblement tangentiellement à la roue et sensiblement horizontalement au dessus de ladite roue.

12. Semoir selon la revendication 1, **caractérisé en ce que** lesdites dents présentent un logement (35) apte à maintenir une graine, lors de la montée de celle-ci, et une portion plane (36) sur laquelle ladite graine se déplace progressivement lors de la descente.

13. Semoir selon la revendication 1, **caractérisé en ce que** lesdites dents présentent au moins une paroi latérale rigide (37, 38).

14. Dispositif de régulation (18a, 18b, 22) pour un semoir selon l'une quelconque des revendications 1 à 13, destiné à être monté entre les moyens de dosage et de transport et les moyens de mise en terre dudit semoir, à proximité desdits moyens de mise en terre, ledit dispositif de régulation (18a, 18b, 22) comprenant un espace de réserve (22a), alimentée en graines (100) via une entrée d'alimentation connectée auxdits moyens de dosage et de transport par une partie amont (24a) dudit conduit de transfert (151a, 151b, 5),
le dispositif comprenant une roue (23) apte à prélever des graines dans ledit espace de réserve (22a), au moyen d'au moins une rangée de dents formant godets, assurant chacune le prélèvement d'une graine dans ladite zone de réserve (22a) et la libération de ladite graine dans une partie aval (24b) dudit conduit de transfert (151a, 51b, 5), et comprenant aussi des moyens de retenue retardant ladite libération de chaque graine, dont une partie s'étend sensiblement tangentiellement à ladite roue et est souple, de façon à épouser au moins deux rayons centrés sur l'axe de rotation :
- un rayon R1 défini par la pointe desdites dents, c'est-à-dire la partie de ladite roue la plus éloignée dudit axe de rotation ; et
- au moins un rayon R2, inférieur audit rayon R1,
**caractérisé en ce que** lesdits moyens de retenue comprennent au moins un premier balai (27) comprenant un assemblage de poils, au moins une partie libre desdits poils s'étendant sensiblement tangentiellement et sensiblement verticalement à la roue (23) et épousant lesdits deux rayons R1 et R2.

## Patentansprüche

1. Sämaschine, umfassend eine Vielzahl von Säelementen (12),
wobei jedes Säelement (12) Dosier- und Fördermittel umfasst, die die Menge der Saatkörner am Ausgang eines Trichters (13) kontrollieren und die Saatkörner in eine Verbindungsleitung (151a, 151b, 5) liefern, um Mittel zum Einsetzen der Saatkörner zu versorgen,
wobei jedes Säelement (12) auch eine Einstellvorrichtung (18a, 18b, 22) umfasst, die zwischen den Dosier- und Fördermitteln und den Einsetzmitteln in der Nähe dieser letztgenannten montiert ist,
wobei die Einstellvorrichtung (18a, 18b, 22) einen Reserveraum (22a) umfasst, der mit Saatkörnern (100) über einen Versorgungseingang, der an die Dosier- und Fördermittel durch einen stromaufwärtigen Abschnitt (24a) der Verbindungsleitung angeschlossen ist, versorgt wird,
wobei die Einstellvorrichtung (18a, 18b, 22) ein Rad (23) umfasst, das geeignet ist, Saatkörner (100) einzeln aus dem Reserveraum (22a) mit Hilfe mindestens einer Reihe von Becher bildenden Zähnen zu entnehmen, die jeweils die Entnahme eines Saatkorns aus der Reservezone (22a) und die Freigabe des Saatkorns in einem stromabwärtigen Abschnitt (24b) der Verbindungsleitung gewährleisten,
und auch umfassend Haltemittel, die die Freigabe jedes Saatkorns verzögern, von denen sich ein Teil im Wesentlichen tangential zu dem Rad erstreckt und biegsam ist, um sich an mindestens zwei Radien, die auf die Drehachse zentriert sind, anzulegen:
- einen Radius R1, der durch die Spitze der Zähne definiert ist, d.h. den Teil des Rades, der von der Drehachse am weitesten entfernt ist; und
- mindestens einen Radius R2, der innerhalb des Radius R1 liegt,
**dadurch gekennzeichnet, dass** die Haltemittel mindestens eine erste Bürste (27), umfassend eine Anordnung von Borsten, umfassen, wobei sich zumindest ein freier Teil der Borsten im Wesentlichen tangential und im Wesentlichen vertikal zum Rad (23) erstreckt und sich an die zwei Radien R1 und R2 anlegt.

2. Sämaschine nach Anspruch 1, **dadurch gekennzeichnet, dass** die Haltemittel mindestens einen Abschnitt aufweisen, der sich entlang eines Seitenrandes der Zähne erstreckt, um eine Seitenwand zu bilden, die die Saatkörner daran hindert, auf die Seite der Zähne zu kippen.

3. Sämaschine nach Anspruch 2, **dadurch gekennzeichnet, dass** die Haltemittel zwischen zwei Positionen beweglich sind:
- einer Position zum Halten eines Saatkorns, in der die Haltemittel gegen das Rad (23) gedrückt sind; und
- einer Position zur Freigabe eines Saatkorns, in der mindestens ein Ende der Haltemittel von dem Rad (23) entfernt ist,
und wobei Betätigungsmittel eine vorübergehende Verlagerung der Haltemittel von der Halteposition in die Freigabeposition gewährleisten.

4. Sämaschine nach Anspruch 1, **dadurch gekennzeichnet, dass** die Haltemittel die Freigabe eines Saatkorns gewährleisten, nachdem das Saatkorn unter einer horizontalen Achse (AH), die durch die Drehachse des Rades (23) verläuft, durchgelaufen ist.

5. Sämaschine nach Anspruch 1, **dadurch gekennzeichnet, dass** die Haltemittel mindestens ein bewegliches und zum Rad (23) vorgespanntes Element umfasst, so dass sich ein Abschnitt des beweglichen Elements entlang eines Abschnitts der Peripherie des Rads (23) in Drehrichtung des Rades (23) erstreckt.

6. Sämaschine nach Anspruch 5, **dadurch gekennzeichnet, dass** zu einem Zeitpunkt und/oder an einer Stelle vor jener, an der die Saatkörner nur mehr der Schwerkraft unterliegen, das bewegliche Element mit mindestens einem der Zähne des Rades einen Korridor zum Halten der Saatkörner bildet.

7. Sämaschine nach Anspruch 3, **dadurch gekennzeichnet, dass** die Betätigungsmittel von den Zähnen (31, 32) gebildet sind oder diese umfassen.

8. Sämaschine nach Anspruch 1, **dadurch gekennzeichnet, dass** das Rad (23) mindestens zwei Reihen von Becher bildenden Zähnen (31, 32) umfasst.

9. Sämaschine nach Anspruch 1, **dadurch gekennzeichnet, dass** sich zumindest der freie Teil der ersten Bürste (27) über den mindestens zwei Zahnreihen (31, 32) und dem Raum zwischen den Zahnreihen (31, 32) erstreckt.

10. Sämaschine nach Anspruch 9, **dadurch gekennzeichnet, dass** die erste Bürste unterschiedliche Strukturen über dem Raum und über den Zahnreihen aufweist.

11. Sämaschine nach Anspruch 1, **dadurch gekennzeichnet, dass** die Haltemittel mindestens eine zweite Bürste (57), umfassend eine Anordnung von Borsten, von denen sich zumindest ein freier Teil im Wesentlichen tangential zum Rad und im Wesentlichen horizontal über dem Rad erstreckt, umfassen.

12. Sämaschine nach Anspruch 1, **dadurch gekennzeichnet, dass** die Zähne eine Aufnahme (35), die geeignet ist, ein Saatkorn beim Aufsteigen desselben zu halten, und einen flachen Abschnitt (36) umfassen, auf dem sich das Saatkorn beim Absteigen nach und nach verlagert.

13. Sämaschine nach Anspruch 1, **dadurch gekennzeichnet, dass** die Zähne mindestens eine starre Seitenwand (37, 38) aufweisen.

14. Einstellvorrichtung (18a, 18b, 22) für eine Sämaschine nach einem der Ansprüche 1 bis 13, die dazu bestimmt ist, zwischen den Dosier- und Fördermitteln und den Einsetzmitteln der Sämaschine in der Nähe der Einsetzmittel montiert zu sein, wobei die Einstellvorrichtung (18a, 18b, 22) einen Reserveraum (22a) umfasst, der über einen Versorgungseingang, der an die Dosier- und Fördermittel durch einen stromaufwärtigen Teil (24a) der Verbindungsleitung (151, 151b, 5) angeschlossen ist, mit Saatkörnern (100) versorgt wird,
wobei die Vorrichtung ein Rad (23) umfasst, das geeignet ist, Saatkörner aus dem Reserveraum (22a) mit Hilfe mindestens einer Reihe von Becher bildenden Zähnen zu entnehmen, die jeweils die Entnahme eines Saatkorns aus der Reservezone (22a) und die Freigabe des Saatkorns in einem stromabwärtigen Abschnitt (24b) der Verbindungsleitung (151a, 151b, 5) gewährleisten,
und auch umfassend Haltemittel, die die Freigabe jedes Saatkorns verzögern, von denen sich ein Teil im Wesentlichen tangential zu dem Rad erstreckt und biegsam ist, um sich an mindestens zwei Radien, die auf die Drehachse zentriert sind, anzulegen:
- einen Radius R1, der durch die Spitze der Zähne definiert ist, d.h. den Teil des Rades, der von der Drehachse am weitesten entfernt ist; und
- mindestens einen Radius R2, der innerhalb des Radius R1 liegt,
**dadurch gekennzeichnet, dass** die Haltemittel mindestens eine erste Bürste (27), umfassend eine Anordnung von Borsten, umfassen, wobei sich zumindest ein freier Teil der Borsten im Wesentlichen tangential und im Wesentlichen vertikal zum Rad (23) erstreckt und sich an die zwei Radien R1 und R2 anlegt.

## Claims

1. A seeder comprising a plurality of seeding elements (12),
each seeding element (12) comprising metering and transport means, controlling the seed flow rate at the outlet of a hopper (13) and delivering said seeds into a transfer duct (151a, 151b, 5) to supply means for planting said seeds,
each seeding element (12) also comprising a control device (18a, 18b, 22) mounted between said metering and transport means and said planting means, close to these,
said control device (18a, 18b, 22) comprising a reserve space (22a), supplied with seeds (100) via a supply inlet connected to said metering and transport means via an upstream portion (24a) of said transfer duct,
said control device (18a, 18b, 22) comprising a wheel (23) capable of collecting seeds (100) one-by-one from said reserve space (22a), by means of at least one row of teeth forming buckets, each ensuring collecting of one seed from said reserve space (22a) and the release of said seed into a downstream portion (24b) of said transfer duct,
and also comprising retaining means delaying said release of each seed, a portion of which extends substantially tangentially to said wheel and is flexible, so as to match with at least two radii centred on the axis of rotation:
- a radius R1 defined by the tip of said teeth, i.e. the portion of said wheel farthest from said axis of rotation; and
- at least one radius R2, smaller than said radius R1,
**characterised in that** said retaining means comprise at least one first brush (27) comprising an assembly of bristles, at least one free portion of said bristles extending substantially tangentially and substantially vertically to the wheel (23) and matching with said two radii R1 and R2.

2. The seeder according to claim 1, **characterised in that** said retaining means have at least one portion extending along a lateral edge of said teeth, so as to form a lateral wall preventing said seeds from tilting on the side of said teeth.

3. The seeder according to claim 2, **characterised in that** said retaining means are movable between two positions:
- a position of retaining a seed, in which said retaining means are pressed against said wheel (23); and
- a position of releasing a seed, in which at least one end of said retaining means is remote from said wheel (23),
and actuation means, ensuring a temporary movement of said retaining means from said retaining position to said release position.

4. The seeder according to claim 1, **characterised in that** said retaining means ensure said release of a seed only after said seed has passed under a horizontal axis (AH) passing through the axis of rotation of said wheel (23).

5. The seeder according to claim 1, **characterised in that** said retaining means comprise at least one movable element pre-stressed towards the wheel (23) so that a portion of said movable element extends along a portion of the periphery of said wheel (23), according to the direction of rotation of said wheel (23).

6. The seeder according to claim 5, **characterised in that**, at a time and/or a location preceding that at which said seeds are no longer subjected only to the force of gravity, said movable element forms with at least one of said teeth of said wheel, a corridor for holding said seeds.

7. The seeder according to claim 3, **characterised in that** said actuation means are formed by or comprise said teeth (31, 32).

8. The seeder according to claim 1, **characterised in that** said wheel (23) comprises at least two rows of teeth (31, 32) forming buckets.

9. The seeder according to claim 1, **characterised in that** at least said free portion of said first brush (27) extends above said at least two rows of teeth (31, 32) and the space between said rows of teeth (31, 32).

10. The seeder according to claim 9, **characterised in that** said first brush has different structures above said space and above said rows of teeth.

11. The seeder according to claim 1, **characterised in that** said retaining means comprise at least one second brush (57) comprising an assembly of bristles at least one free portion of which extends substantially tangentially to the wheel and substantially horizontally above said wheel.

12. The seeder according to claim 1, **characterised in that** said teeth have a housing (35) capable of holding a seed, during rise thereof, and a planar portion (36) over which said seed moves progressively during the descent.

13. The seeder according to claim 1, **characterised in that** said teeth have at least one rigid lateral wall (37, 38) .

14. A control device (18a, 18b, 22) for a seeder according to any one of claims 1 to 13, intended to be mounted between the metering and transport means and the planting means of said seeder, proximate to said planting means, said control device (18a, 18b, 22) comprising a reserve space (22a), supplied with seeds (100) via a supply inlet connected to said metering and transport means via an upstream portion (24a) of said transfer duct (151a, 151b, 5),
the device comprising a wheel (23) capable of collecting seeds from said reserve space (22a), by means of at least one row of teeth forming buckets, each ensuring collecting of one seed from said reserve space (22a) and the release of said seed into a downstream portion (24b) of said transfer duct (151a, 51b, 5),
also comprising retaining means delaying said release of each seed, a portion of which extends substantially tangentially to said wheel and is flexible, so as to match with at least two radii centred on the axis of rotation:
- a radius R1 defined by the tip of said teeth, i.e. the portion of said wheel farthest from said axis of rotation; and
- at least one radius R2, smaller than said radius R1,
**characterised in that** said retaining means comprise at least one first brush (27) comprising an assembly of bristles, at least one free portion of said bristles extending substantially tangentially and substantially vertically to the wheel (23) and matching with said two radii R1 and R2.
